(19) Europäisches Patentamt
European Patent Office
Office européen des brevets

(11) **EP 4 425 380 A1**

(12) **EUROPEAN PATENT APPLICATION**

(43) Date of publication:
**04.09.2024 Bulletin 2024/36**

(21) Application number: **23159369.0**

(22) Date of filing: **01.03.2023**

(51) International Patent Classification (IPC):
**G06N 3/0455** (2023.01)   **G06N 3/088** (2023.01)

(52) Cooperative Patent Classification (CPC):
**G06N 3/0455; G06N 3/088;** G06N 3/096

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Avner, Orly**
  **Haifa (IL)**
• **Linial, Ori**
  **Haifa (IL)**
• **Di Castro, Dotan**
  **3440619 Haifa (IL)**

Remarks:
Amended claims in accordance with Rule 137(2) EPC.

(54) **METHOD FOR TRAINING A MACHINE LEARNING MODEL FOR DETERMINING THE COEFFICIENTS OF A PARTIAL DIFFERENTIAL EQUATION OF A KNOWN OPERATOR-DEFINED FAMILY OF PARTIAL DIFFERENTIAL EQUATIONS**

(57)    The invention relates to a method for training a machine learning model for determining the coefficients of a partial differential equation of a known operator-defined family of partial differential equations, wherein the method comprises the steps of: providing training data for training the machine learning model, wherein the training data comprises data relating to the coefficients of partial differential equations of the operator-defined family of partial differential equations (2); providing a general form of the operator-defined family of partial differential equations (3); training the machine learning model based on the training data and the general form (4); and providing the trained machine learning model.

Fig. 1

EP 4 425 380 A1

**Description**

The present invention relates to a method for training a machine learning model for determining the coefficients of partial differential equation of a known operator-defined family of partial differential equations, wherein the coefficients are determined based on knowledge about the partial differential equation and collected data.

A dynamical system is a system in which a function describes the time dependence of a point in an ambient space, wherein the function is usually a partial differential equation. Examples of dynamical systems include the mathematical models that describe the swinging of a clock pendulum, the flow of water in a pipe, the random motion of particles in the air, or the charging behaviour or aging of an energy storage, for example a battery of an electric vehicle. Solving the corresponding partial equation could further provide information on how a signal evolves over time and space wherein this information can be used for both, prediction and control tasks.

A partial differential equation is further a mathematical equation containing an unknown function of two or more variables and its partial derivatives with respect to these variables. Partial differential equations, respectively the unknown function and its partial derivatives are further expressed based on coefficients, wherein the coefficients can either be constant or variable, wherein the partial differential equations is expressed based on coefficient functions.

Such a partial differential equation is usually derived from first principles and a mechanistic understanding of the corresponding problem after experimentation and data collection. However, for example for many complex real-world applications usually only some dynamics of the corresponding system are known, wherein it is however a complex and computationally intensive task, respectively requires significant computational resources to determine the coefficients of the partial differential equation. Therefore, there is a need for providing an improved method for determining the coefficients of a partial differential equation.

DE 10 2021 200 042 A1 discloses a method for training a neural drift network and a neural diffusion network of a neural stochastic differential equation. The method comprises drawing a training trajectory from training sensor data, the training trajectory containing the training data points for an initial point in time on the basis of the training data points, and determining a data point mean and a data point covariance at each predicted point in time of the series of predicted time points by means of a neural network for the predicted point in time. The method also comprises determining a dependency on weights of the neural drift network and the neural diffusion network of a probability that a data point distribution of a predicted time point given by the determined data point mean value and the determined data point covariance provides training data points at the predicted time point, and adapting the neural drift network and the neural diffusion network to improve the probability.

It is an object of the present invention to provide an improved method for determining the coefficients of a partial differential equation.

This object is solved by a method for training a machine learning model for determining the coefficients of partial differential equation of a known operator-defined family of partial differential equations according to claim 1.

This object is further solved by a method for determining the coefficients of a partial differential equation of a known operator-defined family of partial differential equations according to claim 5.

This object is also solved by a system for training a machine learning model for determining the coefficients of partial differential equation of a known operator-defined family of partial differential equations according to claim 7.

This object is also solved by a system for determining the coefficients of a partial differential equation of a known operator-defined family of partial differential equations according to claim 11.

According to one embodiment of the invention, this object is solved by a method for training a machine learning model for determining the coefficients of partial differential equation of a known operator-defined family of partial differential equations, wherein the method comprises providing training data for training the machine learning algorithm, wherein the training data comprises data relating to the coefficients of partial differential equations of the operator-defined family of partial differential equations, providing a general form of the operator-defined family of partial differential equations, training the machine learning model based on the training data and the general form, and providing the trained machine learning model.

Machine learning models build a model based on sample data, respectively training data in order to make predictions or decisions without being explicitly programmed to do so.

Further, an operator is generally a mapping or function that acts on elements of a space to produce elements of another space, wherein partial differential equations are based on differential operators respectively differentiation operators. Therein, a known operator-defined family of partial differential equations is a set of partial differential equations that include, respectively are based on the same operators, respectively the same partial derivatives, wherein, however, the coefficients can respectively be different. A general form of such an operator-defined family of partial differential equations is further a form, respectively an equation that describes the elements of the corresponding set with variable coefficients, respectively underlying dynamics.

That the training data comprises data relating to the coefficients of partial differential equations of the operator-defined family of partial differential equations further means that either the coefficients of the corresponding partial differential equations are known, or that these coefficients can be derived, respectively be numerically computed based on the corresponding training data.

Thus, a method for training a machine learning model based on data collected form an operator-defined family of partial differential equations accompanied by the general form of this family is provided. This training data can be unlabeled and can usually be easily collected. Therein, the method can be applied to practically and problem modelled by a partial differential equation where data is available for different realizations.

Further, based on the correspondingly trained machine learning model the coefficients of the particular partial differential equation can then be determined in a simple manner without requiring significant computational resources, for example storage space or processor capabilities. Therefore, the computational resources required to determine the coefficients of a particular partial differential equation can be significantly reduced.

Therein, the method can further comprise the step of encoding the provided training data by an encoder before the training data is used for training the machine learning model.

Encoding is the process of compressing, respectively translating information into a form that can be transmitted to another person or system.

By encoding the provided training data, a compact representation of the training data can be provided, whereby further computational resources can be saved, wherein at the same time large amounts of training data can easily be acquired. Further, it is possible to capture the dynamics of the corresponding system.

In one embodiment, the machine learning model further comprises an autoencoder, wherein the encoder is part of the autoencoder, and wherein the step of training the machine learning model comprises training the autoencoder based on the provided training data.

An autoencoder is a type of artificial neural network used to learn efficient data coding in an unsupervised manner. There are two parts in an autoencoder: the encoder and the decoder. The encoder is used to generate a reduced feature representation from an initial input x by a hidden layer h. The decoder is used to reconstruct the initial input from the encoder's output by minimizing the loss function.

Autoencoders provide a useful way to greatly reduce the noise of input, respectively training data for training a machine learning model, making the creation of deep learning models much more efficient.

Further, the training data can comprise sensor data.

Sensor data is the output of a device that detects and responds to some type of input from the physical environment. The output may be used to provide information or input to another system or to guide a process.

Thus, the method can be based on circumstances outside of the data processing equipment on which the machine learning model is trained.

According to another embodiment of the invention, a method for determining the coefficients of a partial differential equation of a known operator-defined family of partial differential equations is provided, wherein the partial differential equation describes a dynamical system, and wherein the method comprises providing a machine learning model for determining the coefficients of a partial differential equation of the known operator-defined family of partial differential equations, wherein the machine learning model has been trained by a method for training a machine learning model for determining the coefficients of a partial differential equation of a known operator-defined family of partial differential equations as described above, providing sample data relating to the dynamical system, and determining the coefficients of the partial differential equation through the machine learning algorithm based on the provided sample data.

Here, sample data is acquired respectively measured data that represents the dynamics of the dynamical system.

Thus, an improved method for determining the coefficients of a partial differential equation of a known operator-defined family of partial differential equations is provided. In particular, a method for determining the coefficients of a partial differential equation of a known operator-defined family of partial differential equations is provided that is based on a machine learning model trained based on data collected form an operator-defined family of partial differential equations accompanied by the general form of this family. This training data can be unlabeled and can usually be easily collected. Therein, the method can be applied to practically and problem modelled by a partial differential equation where data is available for different realizations. Further, based on the correspondingly trained machine learning model the coefficients of the particular partial differential equation can be determined in a simple manner without requiring significant computational resources, for example storage space or processor capabilities. Therefore, the computational resources required to determine the coefficients of a particular partial differential equation can be significantly reduced.

Based on the corresponding partial differential equation, respectively solutions of the corresponding partial differential equation, the dynamical system can then for example be controlled.

In one embodiment the dynamical system is an energy storage. Preferably, energy storage is the capture of energy produced at one time for use at a later time e.g. to reduce imbalances between energy demand and energy production. A device that stores energy can be an accumulator or battery, in particular an electric/electrochemical energy storage, like a rechargeable battery. Energy comes in multiple forms including radiation, chemical, gravitational potential, electrical potential, electricity, elevated temperature, latent heat and kinetic. Energy storage involves converting energy from forms that are difficult to store to more conveniently or economically storable forms. Electrical, electromagnetic energy storages can be a capacitor, supercapacitor, superconducting magnetic energy storage (SMES, also superconducting storage coil).

Here an energy storage is a storage for storage of energy produced at one time for use at a later time, for example the battery of an electric vehicle.

Therein, for example the charging and/or de-charging process of an energy storage, or the aging process of the energy storage can be described by partial differential equations.

However, that the dynamical system is an energy storage should merely be understood as an example embodiment and the energy storage can be any other dynamical system, for example the flow of water in a pipe, too.

According to still a further embodiment of the invention, a system for training a machine learning model for determining the coefficients of a partial differential equation of a known operator-defined family of partial differential equations is provided, wherein the system comprises a first providing unit which is configured to provide training data for training the machine learning algorithm, wherein the training data comprises data relating to the coefficients of partial differential equations of the operator-defined family of partial differential equations, a second providing unit which is configured to a general form of the operator-defined family of partial differential equations, a training unit which is configured to train the machine learning model based on the training data and the general form, and a providing unit which is configured to provide the trained machine learning model.

Thus, a system for training a machine learning model based on data collected form an operator-defined family of partial differential equations accompanied by the general form of this family is provided. This training data can be unlabeled and can usually be easily collected. Therein, the system can be applied to practically and problem modelled by a partial differential equation where data is available for different realizations. Further, based on the correspondingly trained machine learning model the coefficients of the particular partial differential equation can then be determined in a simple manner without requiring significant computational resources, for example storage space or processor capabilities.

Therefore, the computational resources required to determine the coefficients of a particular partial differential equation can be significantly reduced.

Therein, the system can further comprise an encoder which is configured to encode the provided training data before the training data is used by the training unit for training the machine learning model. By encoding the provided training data, a compact representation of the training data can be provided, whereby further computational resources can be saved, wherein at the same time large amounts of training data can easily be acquired. Further, it is possible to capture the dynamics of the corresponding system.

In one embodiment, the machine learning model further comprises an autoencoder, wherein the encoder is part of the autoencoder, and wherein the training unit is configured to train the autoencoder based on the provided training data. Autoencoders provide a useful way to greatly reduce the noise of input, respectively training data for training a machine learning model, making the creation of deep learning models much more efficient.

Further, the training data can comprise sensor data. Thus, the method can be based on circumstances outside of the data processing equipment on which the machine learning model is trained.

According to still a further embodiment of the invention, a system for determining the coefficients of a partial differential equation of a known operator-defined family of partial differential equations is provided, wherein the partial differential equation describes a dynamical system, and wherein the system comprises a first providing unit which is configured to provide a machine learning model for determining the coefficients of a partial differential equation of the known operator-defined family of partial differential equations, wherein the machine learning model has been trained by a system for training a machine learning model for determining the coefficients of a partial differential equation of a known operator-defined family of partial differential equations as described above, a second providing unit which is configured to provide sample data relating to the dynamical system, and a determining unit which is configured to determine the coefficients of the partial differential equation through the machine learning model based on the provided sample data.

Thus, an improved system for determining the coefficients of a partial differential equation of a known operator-defined family of partial differential equations is provided. In particular, a system for determining the coefficients of a partial differential equation of a known operator-defined family of partial differential equations is provided that is based on a machine learning model trained based on data collected form an operator-defined family of partial differential equations accompanied by the general form of this family. This training data can be unlabeled and can usually be easily collected. Therein, the system can be applied to practically and problem modelled by a partial differential equation where data is available for different realizations. Further, based on the correspondingly trained machine learning model the coefficients of the particular partial differential equation can be determined in a simple manner without requiring significant computational resources, for example storage space or processor capabilities. Therefore, the computational resources required to determine the coefficients of a particular partial differential equation can be significantly reduced.

Based on the corresponding partial differential equation, respectively solutions of the corresponding partial differential equation, the dynamical system can then for example be controlled.

In one embodiment the dynamical system is an energy storage. Therein, for example the charging and/or de-charging process of an energy storage, or the aging process of the energy storage can be described by partial differential equations.

However, that the dynamical system is an energy storage should again merely be understood as an example embodiment and the energy storage can be any other dynamical system, for example the flow of water in a pipe, too.

According to still a further embodiment of the invention, a computer program product comprising instructions which, when the program is executed by a computer, cause the computer to carry out a method for training a machine learning model for determining the coefficients of a partial differential equation of a known operator-defined family of partial differential equations as described above, is provided.

Thus, a computer program product which is configured to implement a method for training a machine learning model based on data collected form an operator-defined family of partial differential equations accompanied by the general form of this family is provided. This training data can be unlabeled and can usually be easily collected. Therein, the method can be applied to practically and problem modelled by a partial differential equation where data is available for different realizations. Further, based on the correspondingly trained machine learning model the coefficients of the particular partial differential equation can then be determined in a simple manner without requiring significant computational resources, for example storage space or processor capabilities. Therefore, the computational resources required to determine the coefficients of a particular partial differential equation can be significantly reduced.

According to still another embodiment of the invention, a computer program product comprising instructions which, when the program is executed by a computer, cause the computer to carry out a method for determining the coefficients of a partial differential equation of a known operator-defined family of partial differential equations as described above, is provided.

Thus, a computer program product which is configured to implement an improved method for determining the coefficients of a partial differential equation of a known operator-defined family of partial differential equations is provided. In particular, a method for determining the coefficients of a partial differential equation of a known operator-defined family of partial differential equations is provided that is based on a machine learning model trained based on data collected form an operator-defined family of partial differential equations accompanied by the general form of this family is provided. This training data can be unlabeled and can usually be easily collected. Therein, the method can be applied to practically and problem modelled by a partial differential equation where data is available for different realizations. Further, based on the correspondingly trained machine learning model the coefficients of the particular partial differential equation can be determined in a simple manner without requiring significant computational resources, for example storage space or processor capabilities. Therefore, the computational resources required to determine the coefficients of a particular partial differential equation can be significantly reduced.

The invention will now be described in further detail with reference to the attached drawings.

Fig. 1.    illustrates a method for determining the coefficients of a partial differential equation of a known operator-defined family of partial differential equations according to embodiments of the invention; and

Fig. 2.    illustrates a system for determining the coefficients of a partial differential equation of a known operator-defined family of partial differential equations according to embodiments of the invention.

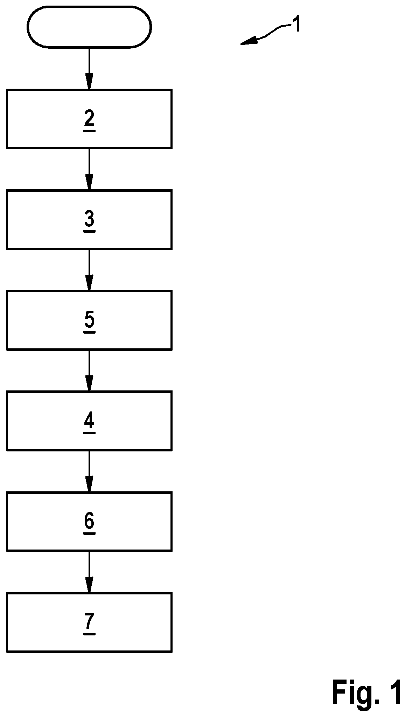

Fig. 1. illustrates a method for determining the coefficients of a partial differential equation of a known operator-defined family of partial differential equations 1 according to embodiments of the invention.

In particular, Fig. 1 illustrates a method for determining the coefficients of a partial differential equation of a known operator-defined family of partial differential equations 1, wherein the partial differential equation describes a dynamical system.

A partial differential equation is usually derived from first principles and a mechanistic understanding of the corresponding problem after experimentation and data collection. However, for example for many complex real-world applications usually only some dynamics of the corresponding system are known, wherein it is however a complex and computationally intensive task, respectively requires significant computational resources to determine the coefficients of the partial differential equation. Therefore, there is a need for providing an improved method for determining the coefficients of a partial differential equation.

Such a partial differential equation can for example be described as

$$\frac{\partial y}{\partial x} = \sum_{i=1}^{k} p_i\,(x, t, y)\frac{\partial^i}{\partial x^i} + p_0(x, t, y) \qquad (1),$$

wherein x is a spatial variable, t is a temporal variable, y defines a signal that depends on x and t, and wherein $p_0$ to $p_k$ are the coefficients of the partial differential equation, wherein a vector of coefficients can be defined by $p = (p_0, ..., p_k)$, and wherein $x \in [0, L]$ and $t \in [0, T]$.

Therein, Fig. 1 shows a method 1 which comprises a step 2 of providing training data for training the machine learning algorithm, wherein the training data comprises data relating to the coefficients of partial differential equations of the operator-defined family of partial differential equations, a step 3 of providing a general form of the operator-defined family of partial differential equations, and a step 4 of training the machine learning model based on the training data and the general form.

Thus, a method for training a machine learning model 1 based on data collected form an operator-defined family of partial differential equations accompanied by the general form of this family is provided. This training data can be unlabeled and can usually be easily collected. Therein, the method can be applied to practically and problem modelled by a partial differential equation where data is available for different realizations.

Further, based on the correspondingly trained machine learning model the coefficients of the particular partial differential equation can then be determined in a simple manner without requiring significant computational resources, for example storage space or processor capabilities. Therefore, the computational resources required to determine the coefficients of a particular partial differential equation can be significantly reduced.

In particular, Fig. 1 illustrates a method, with which a coefficient estimator that is based on a machine learning algorithm can be trained in such a way, that it can predict the coefficients $p_0$ to $p_k$.

The general form the operator-defined family of partial differential equations can further for example be derived from expert knowledge.

During the training in step 4 first random values can be chosen for the machine learning model, respectively the coefficient estimator, wherein thereafter the values can be refined based on a corresponding first loss function.

According to the embodiments of Fig. 1, the method 1 further comprises a step 5 of encoding the provided training data by an encoder before the training data is used for training the machine learning model.

Therein, the encoder is part of an autoencoder, wherein the machine learning model in addition to the coefficient estimator also comprises the autoencoder, and wherein the step 4 of training the machine learning model also comprises training the autoencoder based on the training data.

In particular, the autoencoder is trained by first encoding the input data, wherein the encoded training data is used for training the coefficient estimator, then decoding the encoded input data again, and a second loss function to compare the decoded encoded training data with the original training data.

According to the embodiments of Fig. 1, the training data further comprises sensor data, in particular sensor data collected from the operator-defined family of partial differential equations.

As shown in Fig. 1, the method further comprises a step 6 of providing sample data relating to the dynamical system, and a step 7 of determining the coefficients of the partial differential equation through the trained machine learning model based on the provided sample data.

The determined coefficients can then be forwarded to an expert for interpreting the dynamical system.

The determined coefficients can also be forwarded to a partial differential equation solver together with the corresponding general form and at least a part of the sample data as initial condition, wherein the partial differential equation solver can solve the partial differential equation when real-world data is available, and wherein the dynamical system can be controlled based on the corresponding results.

Therein, the corresponding partial differential equation that is examined by an expert and/or solved by the partial differential equation solver does not have to be considered, respectively included in the training data.

Therefore, the method 1 can provide an explainable solution, can further enable zero-shot learning, and wherein the training can be based on unlabeled training data.

In particular, an explainable method 1 for solving partial differential equations by using a contextual scheme is provided.

The sample data can for example include a patch, respectively a partial input signal y'(x',t'), wherein $x' \in [0, L]$ and $t' \in [0, T_0]$ with $T_0 < T$.

According to the embodiments of Fig. 1, the dynamical system further is an energy storage, in particular a battery of an electric vehicle.

Therein, dynamics of the battery, for example charging and aging can be modelled, respectively for example charging and/or aging management can respectively be modelled based on temperature measurements.

Therein, both models can be accompanied by large datasets, each describing several batteries of the same model.

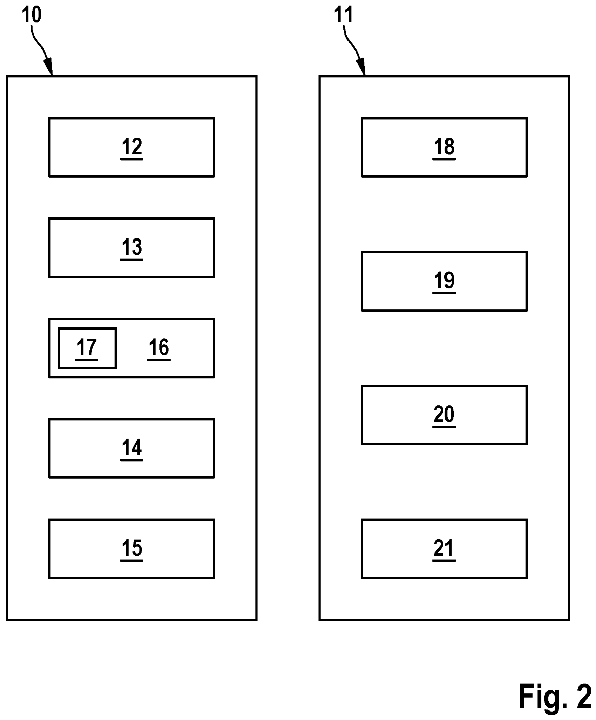

Fig. 2. illustrates a system for determining the coefficients of a partial differential equation of a known operator-defined family of partial differential equations 10 according to embodiments of the invention.

In particular, Fig. 2 illustrates a system for determining the coefficients of a partial differential equation of a known operator-defined family of partial differential equations 10, wherein the partial differential equation describes a dynamical system.

Fig. 2 further shows a system for training a machine learning model for determining the coefficients of a partial differential equation of a known operator-defined family of partial differential equations 11.

As shown in Fig. 2, the system for training a machine learning model for determining the coefficients of a partial differential equation of a known operator-defined family of partial differential equations 11 comprises a first providing unit 12 which is configured to provide training data for training the machine learning algorithm, wherein the training data comprises data relating to the coefficients of partial differential equations of the operator-defined family of partial differential equations, a second providing unit 13 which is configured to a general form of the operator-defined family of partial differential equations, a training unit 14 which is configured to train the machine learning model based on the training data and the general form, and a third providing unit 15 which is configured to provide the trained machine learning model.

Therein, the first providing and the second providing unit can for example respectively be corresponding receivers which are configured to receive corresponding data, for example sensor data. The third providing unit can for example be a transmitter which is configured to transmit corresponding data. The training unit can further for example be realized based on code that is stored in a memory and executable by a processor.

According to the embodiments of Fig. 2, the system for training a machine learning model for determining the coefficients of partial differential equation of a known operator-defined family of partial differential equations 11 further comprises an encoder 16 which is configured to encode the provided training data before the training data is used by the training unit 14 for training the machine learning model, respectively provides correspondingly encoded training data as input to the training unit 14.

Therein, the encoder 16 is again part of an autoencoder 17, wherein the machine learning model in addition to a corresponding coefficient estimator also comprises the autoencoder, and wherein the training unit 14 is configured to also train the autoencoder based on the training data.

Further, the training data again comprises sensor data.

As further shown in Fig. 2, the system for determining the coefficients of a partial differential equation of a known operator-defined family of partial differential equations 10 comprises a fourth providing unit 18 which is configured to provide a machine learning model for determining the coefficients of a partial differential equation of the known operator-defined family of partial differential equations, wherein the machine learning model has been trained by the system for training a machine learning model for determining the coefficients of a partial differential equation of a known operator-defined family of partial differential equations 11, a fifth providing unit 19 which is configured to provide sample data relating to the dynamical system, and a determining unit 20 which is configured to determine the coefficients of the partial differential equation through the machine learning model based on the provided sample data.

Therein, the fourth providing and the second providing unit can again for example respectively be corresponding receivers which are configured to receive corresponding data, for example sensor data. The determining unit can further again for example be realized based on code that is stored in a memory and executable by a processor.

There is further shown a sixth providing unit 21 for providing the determined coefficients, wherein the sixth providing unit 21 is configured to provide the coefficients to an expert for interpretation of the dynamical system and to a partial differential equation solver for solving a corresponding partial differential equation, wherein the dynamical system can be controlled based on the results of the partial differential equation solver.

The sixth providing unit can again for example be a transmitter which is configured to transmit corresponding data.

The shown system 10 is further configured to execute a method for determining the coefficients of a partial differential equation of a known operator-defined family of partial differential equations as described above.

**Claims**

1. Method for training a machine learning model for determining the coefficients of a partial differential equation of a known operator-defined family of partial differential equations, wherein the method comprises the steps of:

   - Providing training data for training the machine learning model, wherein the training data comprises data relating to the coefficients of partial differential equations of the operator-defined family of partial differential equations (2);
   - Providing a general form of the operator-defined family of partial differential equations (3);
   - Training the machine learning model based on the training data and the general form (4); and
   - Providing the trained machine learning model.

2. Method according to claim 1, wherein the method further comprises the step of:

- Encoding the provided training data by an encoder before the training data is used for training the machine learning model (5).

3. Method according to claim 2, wherein the machine learning model further comprises an autoencoder, wherein the encoder is part of the autoencoder, and wherein the step of training the machine learning model (4) comprises training the autoencoder based on the provided training data.

4. Method according to one of claims 1 to 3, wherein the training data comprises sensor data.

5. Method for determining the coefficients of a partial differential equation of a known operator-defined family of partial differential equations, wherein the partial differential equation describes a dynamical system, and wherein the method (1) comprises the steps of:

- Providing a machine learning model for determining the coefficients of partial differential equation of the known operator-defined family of partial differential equations, wherein the machine learning model has been trained by a method for training a machine learning model for determining the coefficients of partial differential equation of a known operator-defined family of partial differential equations according to one of claims 1 to 4;
- Providing sample data relating to the dynamical system (6); and
- Determining the coefficients of the partial differential equation through the machine learning model based on the provided sample data (7).

6. Method according to claim 5, wherein the dynamical system is an energy storage.

7. System for training a machine learning model for determining the coefficients of a partial differential equation of a known operator-defined family of partial differential equations, wherein the system (11) comprises a first providing unit (12) which is configured to provide training data for training the machine learning model, wherein the training data comprises data relating to the coefficients of partial differential equations of the operator-defined family of partial differential equations, a second providing unit (13) which is configured to provide a general form of the operator-defined family of partial differential equations, a training unit (14) which is configured to train the machine learning model based on the training data and the general form, and a third providing unit (15) which is configured to provide the trained machine learning model.

8. System according to claim 7, wherein the system further comprises an encoder (16) which is configured to encode the provided training data before the training data is used by the training unit (14) for training the machine learning model.

9. System according to claim 8, wherein the machine learning model further comprises an autoencoder (17), wherein the encoder (16) is part of the autoencoder (17), and wherein the training unit (14) is configured to train the autoencoder (17) based on the provided training data

10. System according to one of claims 7 to 9, wherein the training data comprises sensor data.

11. System for determining the coefficients of a partial differential equation of a known operator-defined family of partial differential equations, wherein the partial differential equation describes a dynamical system, and wherein the system (10) comprises a first providing unit (18) which is configured to provide a machine learning model for determining the coefficients of partial differential equation of the known operator-defined family of partial differential equations, wherein the machine learning model has been trained by a system for training a machine learning model for determining the coefficients of partial differential equation of a known operator-defined family of partial differential equations according to one of claims 7 to 10, a second providing unit (19) which is configured to provide sample data relating to the dynamical system, and a determining unit (20) which is configured to determine the coefficients of the partial differential equation through the machine learning model based on the provided sample data.

12. System according to claim 11, wherein the dynamical system is an energy storage.

13. A computer program product comprising instructions which, when the program is executed by a computer, cause the computer to carry out a method for training a machine learning model for determining the coefficients of a partial differential equation of a known operator-defined family of partial differential equations according to one of claims 1 to 4.

**14.** A computer program product comprising instructions which, when the program is executed by a computer, cause the computer to carry out a method for determining the coefficients of partial differential equation of a known operator-defined family of partial differential equations according to one of claims 5 or 6.

**Amended claims in accordance with Rule 137(2) EPC.**

**1.** Computer-implemented method for training a machine learning model for determining the coefficients of a partial differential equation of a known operator-defined family of partial differential equations, wherein the partial differential equation describes a dynamical system, wherein the dynamical system is an energy storage, wherein the method comprises the steps of:

- Providing training data for training the machine learning model, wherein the training data comprises sensor data, wherein the training data comprises data relating to the coefficients of partial differential equations of the operator-defined family of partial differential equations (2);
- Providing a general form of the operator-defined family of partial differential equations (3);
- Training the machine learning model based on the training data and the general form (4);
- Encoding the provided training data by an encoder before the training data is used for training the machine learning model (5), wherein the machine learning model further comprises an autoencoder, wherein the encoder is part of the autoencoder, and wherein the step of training the machine learning model (4) comprises training the autoencoder based on the provided training data; and
- Providing the trained machine learning model.

**2.** Method for determining the coefficients of a partial differential equation of a known operator-defined family of partial differential equations, wherein the partial differential equation describes a dynamical system, and wherein the method (1) comprises the steps of:

- Providing a machine learning model for determining the coefficients of partial differential equation of the known operator-defined family of partial differential equations, wherein the machine learning model has been trained by a method for training a machine learning model for determining the coefficients of partial differential equation of a known operator-defined family of partial differential equations according to claim 1;
- Providing sample data relating to the dynamical system (6); and
- Determining the coefficients of the partial differential equation through the machine learning model based on the provided sample data (7).

**3.** System for training a machine learning model for determining the coefficients of a partial differential equation of a known operator-defined family of partial differential equations, wherein the partial differential equation describes a dynamical system, wherein the dynamical system is an energy storage, wherein the system (11) comprises a first providing unit (12) which is configured to provide training data for training the machine learning model, wherein the training data comprises sensor data, wherein the training data comprises data relating to the coefficients of partial differential equations of the operator-defined family of partial differential equations, a second providing unit (13) which is configured to provide a general form of the operator-defined family of partial differential equations, a training unit (14) which is configured to train the machine learning model based on the training data and the general form and is configured to encode the provided training data by an encoder before the training data is used for training the machine learning model (5), wherein the machine learning model further comprises an autoencoder, wherein the encoder is part of the autoencoder, and wherein the training of the machine learning model (4) comprises training the autoencoder based on the provided training data, and a third providing unit (15) which is configured to provide the trained machine learning model.

**4.** System according to claim 3, wherein the system further comprises an encoder (16) which is configured to encode the provided training data before the training data is used by the training unit (14) for training the machine learning model.

**5.** System according to claim 4, wherein the machine learning model further comprises an autoencoder (17), wherein the encoder (16) is part of the autoencoder (17), and wherein the training unit (14) is configured to train the autoencoder (17) based on the provided training data.

**6.** System according to one of claims 3 to 5, wherein the training data comprises sensor data.

7. System for determining the coefficients of a partial differential equation of a known operator-defined family of partial differential equations, wherein the partial differential equation describes a dynamical system, and wherein the system (10) comprises a first providing unit (18) which is configured to provide a machine learning model for determining the coefficients of partial differential equation of the known operator-defined family of partial differential equations, wherein the machine learning model has been trained by a system for training a machine learning model for determining the coefficients of partial differential equation of a known operator-defined family of partial differential equations according to one of claims 3 to 6, a second providing unit (19) which is configured to provide sample data relating to the dynamical system, and a determining unit (20) which is configured to determine the coefficients of the partial differential equation through the machine learning model based on the provided sample data.

8. System according to claim 7, wherein the dynamical system is an energy storage.

9. A computer program product comprising instructions which, when the program is executed by a computer, cause the computer to carry out a method for training a machine learning model for determining the coefficients of a partial differential equation of a known operator-defined family of partial differential equations according to claim 1.

10. A computer program product comprising instructions which, when the program is executed by a computer, cause the computer to carry out a method for determining the coefficients of partial differential equation of a known operator-defined family of partial differential equations according to claim 2.

Fig. 1

Fig. 2

Europäisches Patentamt

European Patent Office

Office européen des brevets

# EUROPEAN SEARCH REPORT

Application Number

**EP 23 15 9369**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rudy Samuel H. ET AL: "Data-driven discovery of partial differential equations", , 21 September 2016 (2016-09-21), XP093067809, Retrieved from the Internet: URL:https://arxiv.org/abs/1609.06401 [retrieved on 2023-07-26] * page 1; figure 1; table 1 * | 1-14 | INV. G06N3/0455 G06N3/088 |
| X | WANG CHUNYU ET AL: "Fast identification method for thermal model parameters of Lithium-ion battery based on discharge temperature rise", JOURNAL OF ENERGY STORAGE, [Online] vol. 44, 15 December 2021 (2021-12-15), page 103362, XP093067814, NL ISSN: 2352-152X, DOI: 10.1016/j.est.2021.103362 Retrieved from the Internet: URL:https://www.sciencedirect.com/science/article/pii/S2352152X21010537> [retrieved on 2023-07-27] * equations 5,11,13; page 5 * | 1-14 | TECHNICAL FIELDS SEARCHED (IPC) G06N |

The present search report has been drawn up for all claims

| Place of search | Date of completion of the search | Examiner |
|---|---|---|
| Munich | 9 August 2023 | Thielemann, Benedikt |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102021200042 A1